Europäisches Patentamt

European Patent Office

Office européen des brevets

(11) Publication number: **0 091 492**
**B1**

(12) **EUROPEAN PATENT SPECIFICATION**

(45) Date of publication of patent specification: **30.09.87**

(21) Application number: **82903182.2**

(22) Date of filing: **21.10.82**

(86) International application number:
**PCT/JP82/00416**

(87) International publication number:
**WO 83/01552 28.04.83 Gazette 83/10**

(51) Int. Cl.⁴: **H 04 N 5/21,** H 04 N 5/14,
H 04 N 5/08, H 04 N 5/93

(54) **REFERENCE TIME-DETECTING CIRCUIT.**

(30) Priority: **21.10.81 JP 168062/81**

(43) Date of publication of application:
**19.10.83 Bulletin 83/42**

(45) Publication of the grant of the patent:
**30.09.87 Bulletin 87/40**

(84) Designated Contracting States:
**DE FR GB NL**

(56) References cited:
**JP-A-49 098 516**
**JP-A-56 037 781**
**US-A-3 678 199**

**IEEE TRANSACTIONS ON CONSUMER ELECTRONICS, vol. CE-26, no. 3, August 1980, pages 638-655, New York, US; Y. ISHIGAKI et al.: "An automatic TV signal equalizer "Picture clinic""**

(73) Proprietor: **SONY CORPORATION**
**7-35 Kitashinagawa 6-Chome Shinagawa-ku Tokyo 141 (JP)**

(72) Inventor: **YAMADA, Hisafumi** Sony Corporation
**7-35, Kitashinagawa 6-chome**
**Shinagawa-ku Tokyo 141 (JP)**
Inventor: **KURIKI, Choei** Sony Corporation
**7-35, Kitashinagawa 6-chome**
**Shinagawa-ku Tokyo 141 (JP)**
Inventor: **SAITO, Junya** Sony Corporation
**7-35, Kitashinagawa 6-chome**
**Shinagawa-ku Tokyo 141 (JP)**

(74) Representative: **Thomas, Christopher Hugo et al**
**D Young & Co 10 Staple Inn**
**London WC1V 7RD (GB)**

Courier Press, Leamington Spa, England.

## Description

This invention relates to reference time detecting circuits for video signals. Such circuits are particularly, but not exclusively, suitable for use in a ghost signal cancelling apparatus which cancels out a ghost signal in a video signal stage.

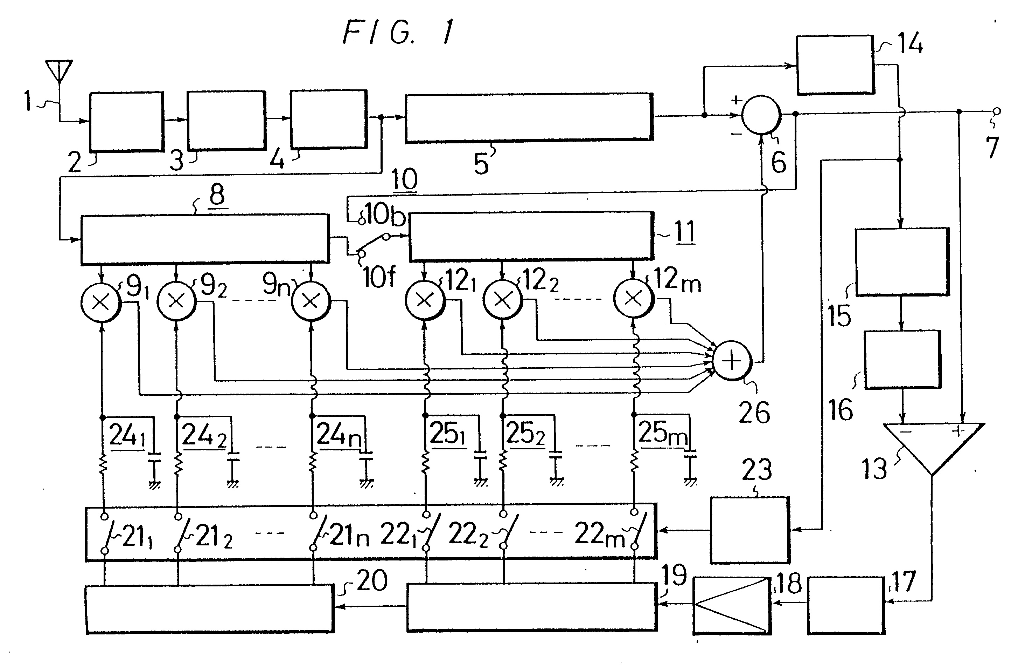

As, for example, shown in Figure 1 of the accompanying drawings, a signal received by an antenna 1 is supplied through a tuner 2 and a video intermediate frequency amplifier 3 to a video signal detecting circuit 4 by which a video signal is detected. The video signal is supplied through a delay circuit 5, the delay time of which corresponds to the interval necessary for cancelling out a pre-ghost signal, to a composer 6. Also, a ghost imitating signal from a transversal filter which will be described later is supplied to the composer 6, and thus the composer 6 supplies therefrom a video signal with the ghost signal eliminated, to an output terminal 7.

The video signal derived from the video signal detecting circuit 4 is supplied to a delay circuit 8 which forms the transversal filter. The delay circuit 8 is formed such that delay elements each of which has a sampling period (for example, 10 nanoseconds) taken as a unit of delay are connected in a plurality of stages ($n$ in number) so as to achieve a delay time equal to the pre-ghost signal eliminating interval, and $n$ taps are led out from the respective stages. The signals from the respective taps are supplied to weighting circuits $9_1$, $9_2$, ... $9_n$, each of which is formed of a multiplier.

The signal from the last stage of the delay circuit 8 is supplied to a terminal 10f of a mode switch 10, while the output signal from the composer 6 is supplied to a terminal 10b of the mode switch 10. The signal from the mode switch 10 is supplied to a delay circuit 11. The delay circuit 11 is formed such that delay elements, each of which has a sampling period taken as a unit of delay, are connected in a plurality of stages ($m$ in number), so as to achieve a delay time equal to the delay-ghost eliminating interval, and $m$ taps are lead out from the respective stages. The signals from the respective taps are supplied to weighting circuits $12_1$, $12_2$, ... $12_m$, each of which is formed of a multiplier.

The video signal from the composer 6 is supplied to a subtracting circuit 13. The video signal from the delay circuit 5 is supplied to a synchronizing signal separating circuit 14, and the separated vertical synchronizing signal therefore is supplied to a standard waveform generating circuit 15 and a low-pass filter 16, wherein a standard waveform approximating to a step waveform of a rising edge VE of the vertical synchronizing signal is formed. The standard waveform is supplied to the subtracting circuit 13.

The signal from the subtracting circuit 13 is supplied to a differentiating circuit 17 which detects the ghost signal.

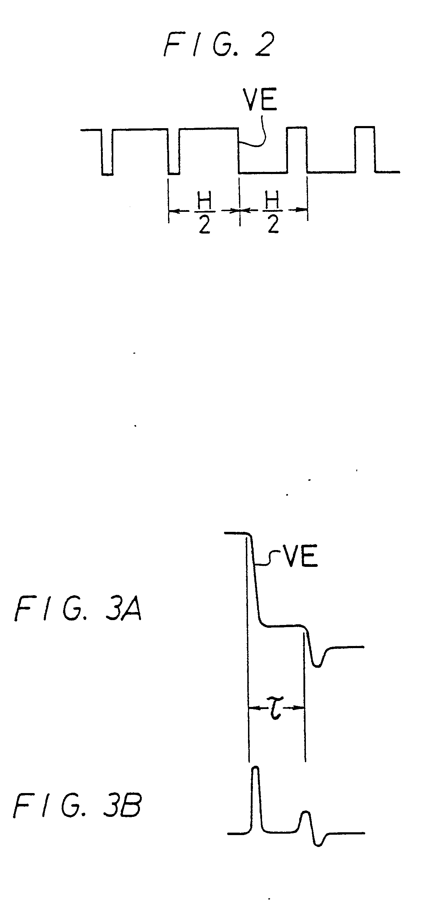

The signal used for detecting and measuring the ghost signal, is one that is contained in a standard television signal and is not affected by other signals for as long a duration as possible, for example, the vertical synchronizing signal. That is, as shown in Figure 2 of the accompanying drawings, the portion containing the edge VE of the vertical synchronizing signal and extending $\pm H/2$ (H is the horizontal period) before and after it, is not affected by other signals. Therefore, the aforesaid standard waveform is subtracted from the signal of such period and the subtracted signal is differentiated thereby to detect a weighting function.

If a video signal contains a ghost signal having, for example, a delay time $\tau$ and a phase different $\phi$ ($=\omega_c\tau$ where $\omega_c$ is a video carrier angular frequency in a high frequency state) of 45° between it and the video signal, a video signal of a waveform shown in Figure 3A of the accompanying drawings appears. On the other hand, if such signal is differentiated and inverted in polarity, a ghost detecting signal of a differentiated waveform shown in Figure 3B of the accompanying drawings is obtained. This differentiated waveform can approximately be regarded as an impulse response of the ghost signal.

The ghost detecting signal of differentiated waveform appearing from the differentiating circuit 17 is supplied through an amplifier 18 to demultiplexers 19 and 20 connected in series. The demultiplexers 19 and 20 are formed in the same way as in the delay circuits 8 and 11 wherein delay elements, each of which has a sampling period taken as a unit of delay, are connected in a plurality of stages, and $m$ and $n$ taps are led out from respective stages. The outputs from the respective taps are supplied to switching circuits $21_1$, $21_2$, ... $21_n$ and $22_1$, $22_2$, ... $22_m$.

The vertical synchronizing signal from the synchronizing separating circuit 14 is supplied to a gate pulse generator 23 which then generates a gate pulse of a duration corresponding to the interval from the edge VE of the vertical synchronizing signal to the end of the H/2 interval. This gate pulse turns on the switching circuits $21_1$ to $22_m$.

The signals from the switching circuits $21_1$ to $22_m$ are respectively supplied to analogue accumulative adders $24_1$, $24_2$, ... $24_n$ and $25_1$, $25_2$, ... $25_m$. The signals from the analogue accumulative adders $24_1$ to $25_m$ are respectively supplied to the weighting circuits $9_1$ to $9_n$ and $12_1$ to $12_m$.

The outputs from the weighting circuits $9_1$ to $9_n$ and $12_1$ to $12_m$ are added together in an adding circuit 26 thereby forming a ghost cancelling signal which is supplied to the composer 6.

The delay circuits 8 and 11, the weighting circuits $9_1$ to $9_n$ and $12_1$ to $12_m$ and the adding circuit 26 form the transversal filter which serves to cancel out the ghost signal. In this case, the analogue accumulative adders $24_1$ to $25_m$ are provided, so that after the distortion of the waveform in the period between the rising edge of the vertical synchronizing signal and the $\pm H/2$ interval before and after it is detected and the weighting function is determined, if the ghost signal still remains not cancelled, the detection as aforesaid is further carried out to reduce the ghost signal not yet cancelled.

The elimination of the delay-ghost signal can be changed to a feedforward mode, a feedback mode and vice versa by switching the mode switch 10.

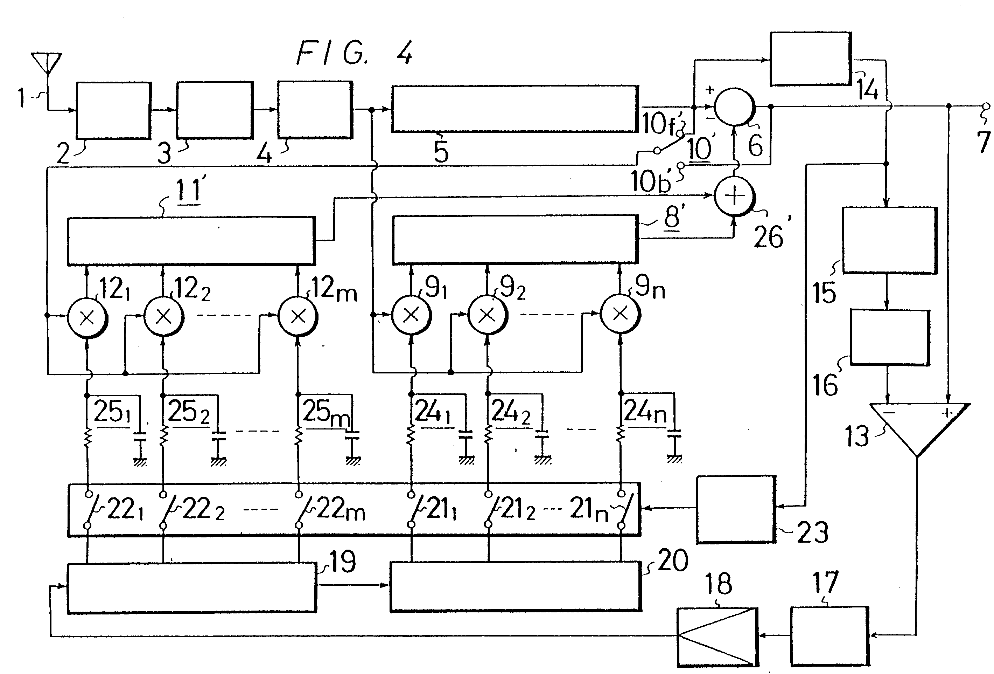

Figure 4 of the accompanying drawings shows a case in which an input-adding type transversal filter is employed to eliminate a ghost signal. In the figure, like parts corresponding to those of Figure 1 are marked with the same references and will not be described in detail.

The video signal from the video signal detecting circuit 4 is supplied to the weighting circuits $9_1$ to $9_n$, and the signals from the weighting circuits $9_1$ to $9_n$ are respectively supplied to input terminals of a delay circuit 8'. The delay circuit 8' is formed of $n$ delay elements, each of which has a sampling period as a unit of delay, and $n$ input terminals are provided between the respective stages.

The signals at the input and output sides of the composer 6 are supplied to terminals 10f' and 10b' of a mode switch 10'. The signal from the mode switch 10' is supplied to the weighting circuits $12_1$ to $12_m$, and the signals from the weighting circuits $12_1$ to $12_m$ are respectively supplied to input terminals of a delay circuit 11'. The delay circuit 11' is formed of $m$ delay elements, each of which has a sampling period as a unit of delay, and $m$ input terminals are provided between the respective stages thereof.

The signals derived from the last stages of the delay circuits 8' and 11' are added together in an adding circuit 26' so as to form a ghost cancelling signal. This ghost cancelling signal is supplied to the composer 6.

This circuit can eliminate the ghost signal in the same way as in the aforesaid circuit having the output-adding type transversal filter.

Furthermore, in the aforesaid circuit, without the differentiating circuit 17, a difference of outputs between the adjacent bits from the demultiplexers 19 and 20 is used to obtain a difference output, and the weighting operation can be performed by the use of such difference output.

Moreover, if the demultiplexers 19 and 20, and the delay circuits 8 and 11 are used in common, and upon determining the weighting amount the weighted signals are supplied to the delay circuits and then stored in memory elements, the weighting operation can be carried out using the stored signals.

In this way, the ghost signal can be eliminated in, for example, a video signal stage.

In such a ghost signal cancelling apparatus, the formation of the standard waveform and the switching timing of the switching circuits $21_1$ to $22_m$ are determined by, for example, the leading edge of the vertical synchronizing signal taken as a reference time. In that case, quite a high precision is required for the detection of the reference time, and experiments reveal that the precision must be within 35 nanoseconds.

However, since the conventional synchronizing separating circuit includes therein a low-pass filter, high frequency band range information is lost, and the leading edge of the signal is blunted. As a result, if the reference time is detected from the vertical synchronizing signal thus separated, the reference time may be delayed.

Therefore, it has been proposed that a masking pulse of about H/2 duration which includes the leading edge of, for example, the vertical synchronizing signal is formed, and this masking pulse and the video signal are employed directly to detect the transit of the leading edge.

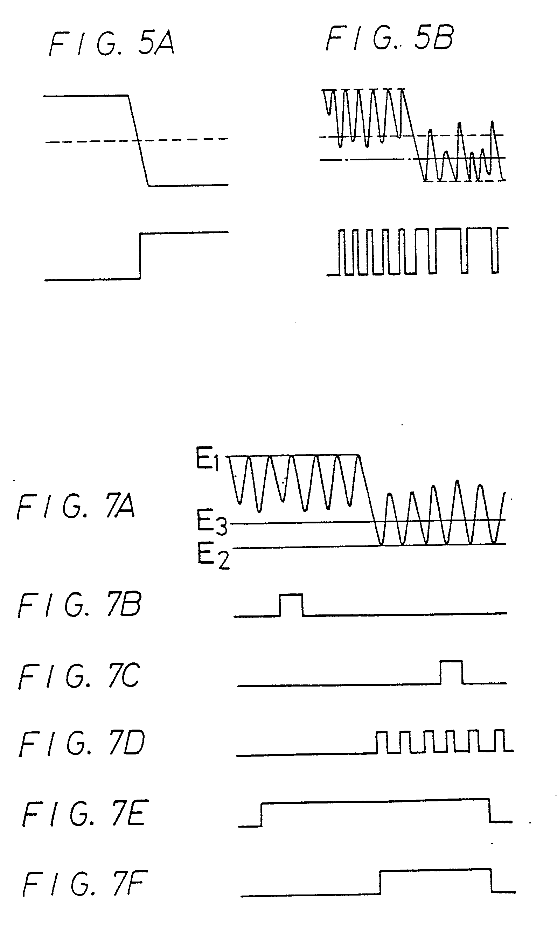

However, in the case of this previously proposed method, the influence of noise frequently causes erroneous detection. That is, when detecting the transit, a threshold level is provided to detect a time point at which the signal crosses this level. In general, this threshold level is selected as a half level between sync-tip and pedestal level. In that case, when the noise level is small as shown in Figure 5A of the accompanying drawings, quite a precise detection can be carried out. On the contrary, when the noise level is large as shown in Figure 5B of the accompanying drawings, and this noise exceeds the half level, an error pulse occurs each time, so that the correct reference time cannot be detected.

The reason for this is that, since a synchronizing separating clamping circuit provided at the input side of the detecting circuit causes the sync-tip to pedestal portions to be very substantially enlarged, particularly when the electric field is weak, the noise level is also substantially increased.

US Patent Specification US—A—3 678 199 discloses a circuit for deriving accurate vertical time reference signals for locking or driving apparatuses such as television receivers, and permitting vertical timing advances. The pulses of a synchronized pulse train each initiate the generation of a continuous ramp function which returns to its initial potential when the initiating pulse ends. A comparator, responsive to the ramp function reaching a threshold level, initiates a pulse, and, when the ramp function returns to its initial potential, terminates the pulse. This threshold derived pulse is applied to a flip-flop circuit which changes state at the termination time. The erroneous detection provoked by noise is thus avoided.

According to the present invention there is provided a reference time detecting circuit for a video signal, the circuit comprising:

a video signal source for supplying a video signal including vertical and horizontal synchronizing signals where a transit portion of a predetermined synchronizing signal is selected as a reference time point;

a masking pulse generator connected to said video signal source for generating a masking pulse at a timing including said reference time point;

a level detector connected to said video signal source for detecting the level of said predetermined synchronizing signal and deriving an output signal when the level of said predetermined synchronizing signal goes over a half level in the direction of the sync-tip level thereof;

a flip-flop circuit connected to said masking pulse generator and said level detector for being triggered by said masking pulse and the output signal of said level detector such that the state of said flip-flop circuit is reversed at the rising edge of the output signal of said level detector during the period of said masking pulse; and

output means connected to said flip-flop circuit for deriving a reference-time detected output signal corresponding to said transit portion.

The invention will now be described by way of example with reference to the accompanying drawings, throughout which like parts are referred to by like references, and in which:

Figures 1 to 5 are diagrams used to explain the previously proposed ghost signal cancelling apparatus;

Figures 6 and 8 are circuit diagrams of an embodiment of this invention; and

Figures 7 and are waveform diagrams used for explaining the circuits of Figures 6 and 8.

In the circuit of Figure 6, a video signal is supplied from an input terminal 31 to a synchronizing separating circuit formed of a comparator 32 and a low-pass filter 33. The signal from the low-pass filter 33 is supplied to a vertical synchronizing signal separating circuit 34 formed of a low-pass filter. The vertical synchronizing signal separated by the synchronizing signal separating circuit 34 is supplied to a masking pulse generating circuit 35 which then generates a masking pulse corresponding to the interval including the leading edge of the vertical synchronizing signal.

The signal from the input terminal 31 is also supplied through a clamping capacitor 41 to the connection point between a resistor 43 and a constant current source 44, in a series circuit formed of transistor 42, the resistor 43 and the constant current source 44 which form a bias circuit. The signal at this connection point is supplied to the base of a transistor 45 which forms a differential amplifier. The base of another transistor 46 is supplied with a voltage at the connection point between a resistor 48 and a constant current source 49 in a series circuit formed of a transistor 47, the resistor 48 and the constant current source 49 which form a bias circuit. A signal current flowing through the collector of the transistor 46 is derived via a current mirror circuit 50.

This signal is supplied through a switch 51 to a low-pass filter 52 and a buffer amplifier 53, while it is also supplied through a switch 54 to a low-pass filter 55 and a buffer amplifier 56. The signals from the buffer amplifiers 53 and 56 are added together through resistors 57 and 58, and then fed to a comparator 59. The signal from the current mirror circuit 50 is also supplied to the comparator 59.

The masking pulse from the masking pulse generating circuit 35 is supplied to a D terminal of a D-type flip-flop circuit 60, and this signal is inverted in polarity and supplied to a clear terminal of the flip-flop circuit 60. The signal from the comparator 59 is supplied to the clock terminal of the flip-flop circuit 60, and so the output of the flip-flop circuit 60 is supplied to an output terminal 61.

In this circuit, the current mirror circuit 50 generates a signal as, for example, shown in Figure 7A. For this signal, the switches 51 and 54 are turned on during periods as, for example, shown in Figures 7B and 7C, respectively. Thus, the buffer amplifiers 53 and 56 generate voltages (E1 and E2) corresponding to the pedestal and sync-tip levels of the synchronizing signal, respectively. These voltages are added together through the resistors 57 and 58. If the resistance values of the resistors 57 and 58 are R1 and R1, a voltage E3 obtained by the addition is:

$$E3 = \frac{E1\ R2 + E2\ R1}{R1 + R2}$$

If R2<R1, then:

$$E3 < \frac{E1 + E2}{2}$$

The resistance values R1 and R2 are adjusted so as to make the voltage E3 equal to a level as, for example, shown by a chain line in Figure 5B.

The voltage E3 is supplied to the comparator 59, so that the comparator 59 generates a signal as shown in Figure 7D. Meanwhile, the masking pulse generating circuit 35 generates a signal as shown in Figure 7E. These signals are supplied to the flip-flop circuit 60, so that a signal as shown in Figure 7F appears at the output terminal 61.

In this way, the reference time is detected. Since the detection level is set at over half the level of the synchronizing signal, the reference time can be detected by a first pulse within the range of the masking pulse. Furthermore, since this signal and the masking pulse are supplied to the flip-flop circuit 60, the reference time signal can be generated quite easily.

It is possible for the detection level (voltage E3) supplied to the comparator 59 not to be fixed as aforesaid, but variable depending on the detected level of noise.

Embodiments of the invention are particularly effective for use with a ghost cancelling apparatus in which the demultiplexer and the delay circuit are used in common.

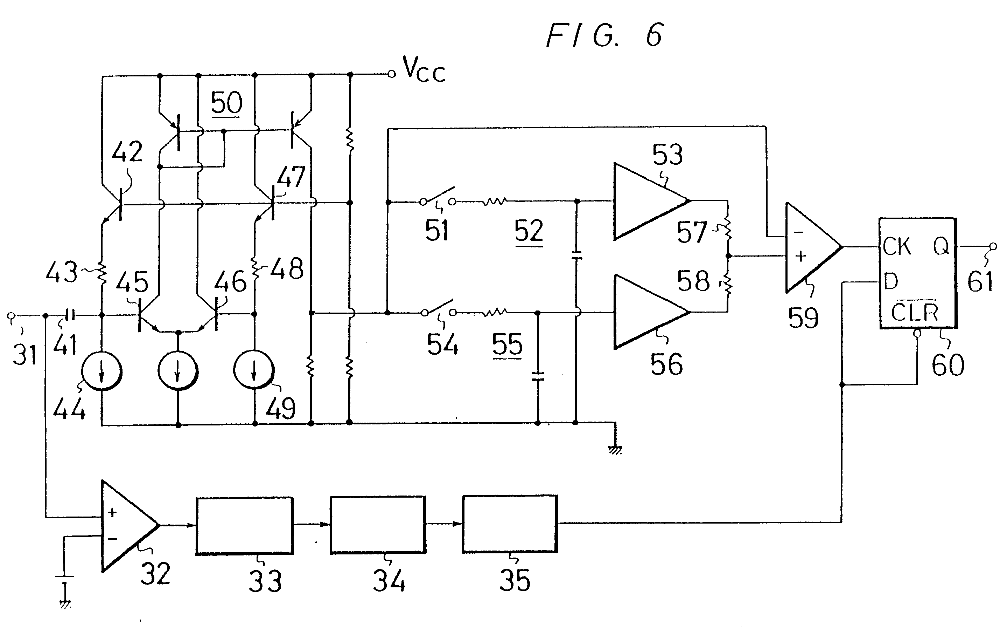

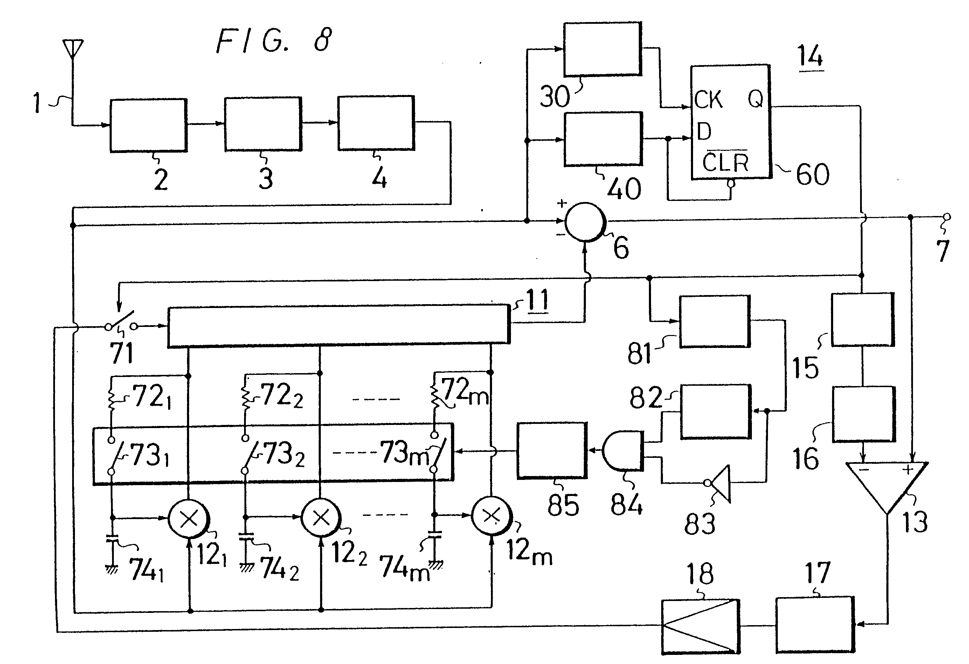

Figure 8 shows an example of such a ghost cancelling apparatus. For the sake of simplicity, the delay-ghost signal is eliminated by the input-adding type transversal filter in the feedback mode.

A ghost detecting signal from the amplifier 18 is supplied through a switch 71 to the delay circuit 11, and the signals derived from the respective stages are supplied through resistors $72_1$, $72_2$, ... $72_m$ and switches $73_1$, $73_2$, ... $73_m$ to capacitors

$74_1$, $74_2$, ... $74_m$. The signals from the capacitors $74_1$ to $74_m$ are supplied to the weighting circuits $12_1$ to $12_m$ from which the weighted video signals are supplied to the respective taps of the delay circuit 11.

In this apparatus, the switch 71 is turned on during a predetermined period after the leading edge of, for example, the vertical synchronizing signal while the switches $73_1$ to $73_m$ are turned on during a predetermined short period from a time point at which the delay time of the delay circuit 11 elapses after the leading edge of the vertical synchronizing signal. It should be assumed that the period during which the switch 71 is turned on lasts after a time point at which the switches $73_1$ to $73_m$ are turned on.

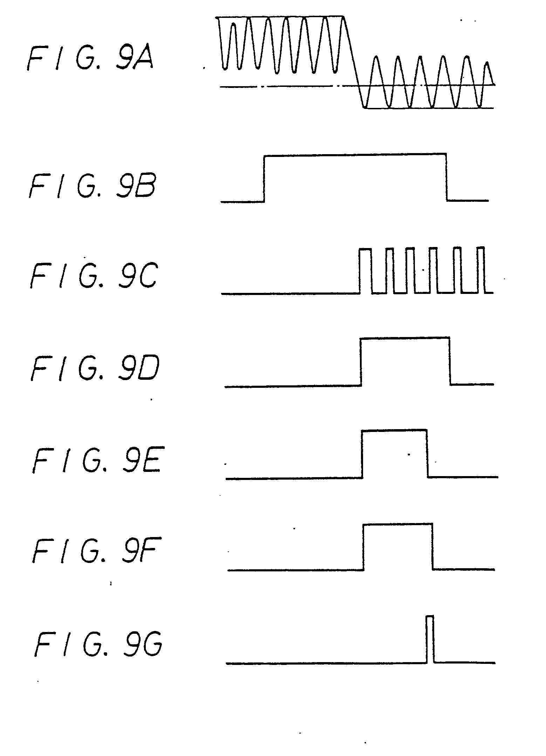

In that case, when supplied with a leading edge as, for example, shown in Figure 9A, a circuit 40 including the comparator 32 to the generating circuit 35 (Figure 6) generates a masking pulse as shown in Figure 9B, while a circuit 30 including the capacitor 41 to the comparator 59 (Figure 6) generates a pulse shown in Figure 9C. Since these pulses are supplied to the flip-flop circuit 60 from which a signal as shown in Figure 9D is derived, the switch 71 can be directly controlled by using this signal.

This signal is supplied to a monostable multivibrator 81 which forms a pulse of a duration corresponding to the delay time of the delay circuit 11, as shown in Figure 9E, which is supplied to a monostable multivibrator 82 which forms a pulse with a somewhat longer duration as shown in Figure 9F. These signals are supplied directly and through an inverter 83 to an AND circuit 84 which generates a pulse as shown in Figure 9G. This signal is supplied to a drive circuit 85 by which the switches $73_1$ to $73_m$ are controlled.

Thus, the ghost cancelling apparatus is formed with the demultiplexer and the delay circuit used in common. In this case, the switch 71 can be directly controlled by the signal from the flip-flop circuit 60. When generating the control signal for the switches $73_1$ to $73_m$, the signal is formed as a single pulse, so it can be formed quite easily.

With embodiments of the invention, a precise reference time signal can be obtained using a simple arrangement.

The invention is not limited to the detection of the leading edge of the vertical synchronizing signal, but can also be applied to the detection of other reference synchronizing signals in a video signal.

## Claims

1. A reference time detecting circuit for a video signal, the circuit comprising:

a video signal source (31) for supplying a video signal including vertical and horizontal synchronizing signals where a transit portion of a predetermined synchronizing signal is selected as a reference time point;

a masking pulse generator (35) connected to said video signal source for generating a masking pulse at a timing including said reference time point;

a level detector (59) connected to said video signal source for detecting the level of said predetermined synchronizing signal and deriving an output signal when the level of said predetermined synchronizing signal goes over a half level in the direction of the sync-tip level thereof;

a flip-flop circuit (60) connected to said masking pulse generator (35) and said level detector (59) for being triggered by said masking pulse and the output signal of said level detector such that the states of said flip-flop circuit (60) is reversed at the rising edge of the output signal of said level detector (59) during the period of said masking pulse; and

output means (61) connected to said flip-flop circuit (60) for deriving a reference-time detected output signal corresponding to said transit portion.

2. A circuit according to claim 1 wherein said flip-flop circuit (60) is a D-type flip-flop having a D terminal, a clock terminal and a clear terminal, the masking pulse is supplied to said D terminal and said clear terminal, and the input signal from said level detector (59) is supplied to said clock terminal.

3. A circuit according to claim 1 or claim 2 wherein said predetermined synchronizing signal is a vertical synchronizing signal, and said transit portion is a leading edge thereof.

### Patentansprüche

1. Bezugszeit-Feststellungsschaltung für ein Videosignal mit

— einer Videosignalquelle (31) zum Ausgeben eines Videosignals, das Vertikal- u. Horizontalsynchronsignale enthält, wobei ein Durchgangsabschnitt eines vorbestimmten Synchronsignals als ein Referenzzeitpunkt ausgewählt ist,

— einem mit der Videosignalquelle verbundenen Maskenimpulsgenerator (35), der ein Maskenimpuls bei einer Zeitsteuerung erzeugt, die den Referenzzeitpunkt enthält,

— einem Pegeldetektor (59), der mit der Videosignalquelle verbunden ist, zum Erfassen de Pegels des vorbestimmten Synchronsignals und zum Ableiten eines Ausgangssignals, wenn der Pegel des vorbestimmten Synchronsignals den halben Pegel in der Richtung dessen Synchronbodenpegels überschreitet,

— einer mit dem Maskenimpulsgenerator (35) und dem Pegeldetektor (59) verbundenen Flipflop-Schaltung (60) zum Triggern durch den Maskenimpuls und das Ausgangssignal des Pegeldetektors, derart, daß der Schaltzustand der Flipflop-Schaltung (60) bei der Anstiegsflanke des Ausgangssignals des Pegeldetektors (59) während der Periode des Maskenimpulses umgekehrt wird, und

— einer mit der Flipflop-Schaltung (60) verbundenen Ausgabeeinrichtung (61) zum Ableiten eines bezugszeiterfaßten Ausgangssignals, das mit dem Durchgangsabschnitt korrespondiert.

2. Schaltung nach Anspruch 1, bei der die Flipflop-Schaltung (60) ein D-Flipflop mit einem D-Anschluß, einem Taktanschlub und einem Löschanschluß ist, wobei der Maskenimpuls dem D-Anschluß und dem Löschanschluß zugeführt wird und das Eingangssignal vom Pegeldetektor (59) dem Taktanschluß zugeführt wird.

3. Schaltung nach Anspruch 1 oder 2, bei der das vorbestimmte Synchronsignal ein Vertikalsynchronsignal ist und der Durchgangsabschnitt eine Vorderflanke davon ist.

**Revendications**

1. Circuit de détection d'instant de référence pour signal vidéo, ce circuit comprenant:

une source de signal vidéo (31) pour fournir un signal vidéo comprenant des signaux de synchronisation verticale et horizontale où une partie transitoire d'un signal de synchronisation prédéterminé est choisie comme instant de référence;

un générateur d'impulsion de masquage (35) connecté à la source de signal vidéo pour fournir une impulsion de masquage d'une durée qui inclut l'instant de référence;

un détecteur de niveau (59) connecté à la source de signal vidéo pour détecter le niveau du signal de synchronisation prédéterminé et fournir un signal de sortie quand le niveau du signal de synchronisation prédéterminé dépasse la moitié du niveau dans la direction du niveau du maximum de synchronisation;

un circuit de bascule (60) connecté au générateur d'impulsion de masquage (35) et au détecteur de niveau (59) pour être déclenché par l'impulsion de masquage et le signal de sortie du détecteur de niveau de sorte que l'état du circuit de bascule (60) est inversé au niveau du front montant du signal de sortie du détecteur de niveau (59) pendant la durée de l'impulsion de masquage; et

un moyen de sortie (61) connecté au circuit de bascule (60) pour fournir un signal de sortie détecté par rapport à une référence temporelle correspondant à la partie transitoire.

2. Circuit selon la revendication 1, dans lequel le circuit de bascule (60) est une bascule de type D ayant une borne D, une borne d'horloge et une borne d'effacement, l'impulsion de masquage est fournie à la borne D et à la borne d'effacement, et le signal d'entrée en provenance du détecteur de niveau (59) est fourni à la borne d'horloge.

3. Circuit selon l'une des revendications 1 ou 2, dans lequel le signal de synchronisation prédéterminé est un signal de synchronisation verticale et la partie transitoire est le front avant de ce signal.

FIG. 1

0 091 492

# F I G. 2

# F I G. 3A

# F I G. 3B

FIG. 4

0 091 492

FIG. 5A

FIG. 5B

FIG. 7A

$E_1$
$E_3$
$E_2$

FIG. 7B

FIG. 7C

FIG. 7D

FIG. 7E

FIG. 7F

FIG. 6

FIG. 8

FIG. 9A

FIG. 9B

FIG. 9C

FIG. 9D

FIG. 9E

FIG. 9F

FIG. 9G